# EUROPÄISCHE PATENTSCHRIFT

(11) **EP 3 500 452 B1**
(45) Veröffentlichungstag und Bekanntmachung des Hinweises auf die Patenterteilung: **15.07.2020**
(21) Anmeldenummer: 17781434.0
(22) Anmeldetag: 28.09.2017
(51) Int. Cl.: B60P 7/08

(54) **VORRICHTUNG ZUR SICHERUNG VON LADUNG AUF EINER TRANSPORTFLÄCHE BEISPIELSWEISE EINES KRAFTFAHRZEUGES ODER EINES EISENBAHNWAGGONS**
DEVICE FOR SECURING LOADS ON A TRANSPORT SURFACE, FOR EXAMPLE OF A MOTOR VEHICLE OR A RAILROAD CAR
DISPOSITIF DE FIXATION D'UN CHARGEMENT SUR UNE SURFACE DE TRANSPORT, PAR EXEMPLE D'UN VÉHICULE À MOTEUR OU D'UN WAGON DE VÉHICULE FERROVIAIRE

(30) Priorität: 19.10.2016 DE 202016105855 U
(43) Veröffentlichungstag der Anmeldung: 26.06.2019
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2017/074650
(87) Internationale Veröffentlichungsnummer: WO 2018/072981

(56) Entgegenhaltungen:
- EP-A1- 2 727 767
- WO-A1-2009/113873
- WO-A1-2016/075663
- FR-A1- 2 806 288
- US-A- 5 193 955

## Beschreibung

Die Erfindung betrifft eine Vorrichtung zur Sicherung von Ladung auf einer Transportfläche beispielsweise eines Kraftfahrzeuges oder eines Eisenbahnwaggons, mit wenigstens einem die Ladung zumindest teilweise umschlingenden flexiblen Sicherungsmittel, welches an zwei oder mehr Zurrpunkten der Transportfläche festgelegt ist, ferner mit wenigstens einer Spannvorrichtung für das Sicherungsmittel, und mit einem oder mehreren Zugspannungsmesselementen zum Erfassen der Spannung des Sicherungsmittels, wobei eine Steuereinheit vorgesehen ist, welche in Abhängigkeit von mit Hilfe des Zugspannungsmesselementes erfassten Spannungswerten des Sicherungsmittels die Spannvorrichtung entsprechend beaufschlagt.

Bei der Lehre nach der EP 1 467 193 B1 geht es um ein System zur Überwachung der Bandspannung eines Gurtes und insbesondere eines Zurrgurtes. Mit Hilfe der bekannten Vorrichtung wird folglich das flexible Sicherungsmittel in Gestalt eines Spanngurtes oder Zurrgurtes hinsichtlich seiner jeweiligen Zugspannung gemessen und überwacht. Dies erklärt sich aufgrund der Tatsache, dass bisher in der Praxis der feste Sitz des fraglichen Spanngurtes bzw. Sicherungsmittels üblicherweise vor einer Fahrt eines LKWs oder Eisenbahnwaggons und dann noch in Fahrpausen manuell kontrolliert worden ist. Eine zusätzliche Kontrolle während der Fahrt war nicht möglich und ist auch nicht durchgeführt worden.

Dadurch bestand und besteht in der Praxis die Gefahr, dass die mit Hilfe des Sicherungsmittels bzw. des einen oder der mehreren Gurte gesicherte Ladung verrutscht und folglich der gespannte Gurt gelockert wird. Als Folge hiervon kann nicht nur die Ladung vom Kraftfahrzeug herunterfallen und andere Verkehrsteilnehmer gefährden, sondern es verändert sich auch unter Umständen der Schwerpunkt des Kraftfahrzeuges und mithin sein Fahrverhalten. Das kann weitreichende Folgen bis hin zu einem Unfall haben.

Aus diesem Grund lehrt die bekannte Lehre nach der EP 1 467 193 B1 ein System zum Überwachen des Sitzes eines um die Ladung eines Lastkraftwagens gespannten Gurtes, welcher nicht nur mit einem Zugspannungsmesselement ausgerüstet ist. Sondern eine zusätzliche Gurteinheit verfügt über eine Stromversorgung und einen Sender zum Übertragen von aus der erfassten Gurtspannung erzeugten Datensignalen. Die Datensignale werden an eine elektrisch betriebene Anzeigeeinheit zur jederzeitigen Information eines Fahrers oder Beifahrers in die Führerkabine des Lastkraftwagens übertragen. Mit Hilfe eines dortigen Empfängers zum Empfangen der Datensignale von dem Sender sowie der Anzeigevorrichtung kann eine optische und/oder akustische Anzeige von Informationen betreffend die Gurtspannung erfolgen. Das hat sich grundsätzlich bewährt.

Eine vergleichbare Vorgehensweise wird in der WO 2009/113873 A1 verfolgt und beschrieben. Hier geht es um eine Sensoreinheit zur Wiedergabe der an einem Spannmittel bzw. einer Spannvorrichtung anliegenden Zugspannung. Bei der Spannvorrichtung kann es sich u.a. um eine Ratsche handeln. Mit Hilfe der Sensoreinheit lassen sich verschiedene Größen wie die Spannung, eine zugehörige Kraft, der Druck oder sogar auch ein Biegemoment oder Schermoment ermitteln. Mit Hilfe einer Sendeempfangseinheit erfolgt wiederum eine Übermittlung der fraglichen Sensorwerte an eine externe Einheit.

Im Rahmen der gattungsbildenden Lehre nach der WO 2016/075663 A1 geht es um einen Apparat zur Ladungssicherung, bei dem einzelne Spannelemente mit den zugehörigen Sensoren ausgerüstet sind. Während des Transportes wird mithilfe dieser Sensoren die Zugspannung in einem Sicherungsmittel erfasst und an einen Prozessor übergeben. Der Prozessor vergleicht die Werte für die Zugspannung mit vorgegebenen Werten und gibt daraufhin Parameter zur Korrektur der Zugspannung aus.

Der Stand der Technik hat sich grundsätzlich bewährt, wenn es darum geht, den Spannungszustand eines Sicherungsmittels zur Sicherung einer Ladung auf der Transportfläche eines Kraftfahrzeuges oder Eisenbahnwaggons zu erfassen und an einen Empfänger (drahtlos) zu übermitteln. Allerdings ist durch diese Vorgehensweise selbst bei einer mit der Übermittlung verbundenen Warnung an den Fahrer zumindest dann noch kein Sicherheitsgewinn erreicht, wenn der Fahrer oder der Beifahrer die betreffenden Warnungen schlicht und ergreifend ignoriert. Vor einem vergleichbaren oder noch größeren Problem stehen sogenannte selbstfahrende Lastkraftwagen, bei denen ein Fahrer nicht (mehr) an Bord ist, um die Ladung gegebenenfalls neu zu sichern bzw. das Sicherungsmittel zusätzlich oder anders zu spannen. Hier setzt die Erfindung ein.

Der Erfindung liegt das technische Problem zugrunde, eine derartige Vorrichtung zur Sicherung von Ladung auf einer Transportfläche, beispielsweise eines Kraftfahrzeuges oder eines Eisenbahnwaggons der eingangs beschriebenen Ausführungsform so weiter zu entwickeln, dass eine eventuelle Reaktion auf eine nachlassende Wirkung des Sicherungsmittels ohne einen zusätzlichen Eingriff des Fahrers oder Beifahrers zur Verfügung gestellt wird.

Zur Lösung dieser technischen Problemstellung ist eine gattungsgemäße Vorrichtung zur Sicherung von Ladung auf einer Transportfläche im Rahmen der Erfindung dadurch gekennzeichnet, dass das Sicherungsmittel mit dem Zugspannungsmesselement ausgerüstet und hierzu das Zugspannungsmesselement in das Sicherungsmittel integriert ist, wobei das Zugspannungsmesselement als Kunststofffaser und/oder Kunststoffgurt ausgebildet ist, welche (r) ein spannungsproportionales elektrisches Messsignal an die Steuereinheit (9) übermittelt.

Nach vorteilhafter Ausgestaltung ist die fragliche Steuereinheit als Regeleinheit ausgebildet. Grundsätzlich kann im Rahmen der Erfindung natürlich auch lediglich mit einer reinen Steuerung gearbeitet werden, die beispielsweise turnusgemäß die Zugspannungsmesselemente zum Erfassen der Spannung des Sicherungsmittels abfragt und dann die Spannvorrichtung jeweils nachführt. Meistens ist die Steuereinheit als Regeleinheit ausgelegt. In diesem Fall führt die Regeleinheit nach Maßgabe eines oder mehrerer vorgegebener Soll-Spannungswerte durch Vergleich mit seitens des Zugspannungsmesselementes erfassten Ist-Spannungswerten die Spannvorrichtung regelnd nach.

D.h., in der als Regeleinheit ausgelegten Steuereinheit sind ein oder mehrere Soll-Spannungswerke für das Sicherungsmittel hinterlegt. Mit Hilfe des einen oder der mehreren Zugspannungsmesselemente werden nun aktuelle Ist-Spannungswerte für das Sicherungsmittel ermittelt. Diese Ist-Spannungswerte werden an die Regeleinheit übermittelt und hier mit den korrespondierenden Soll-Spannungswerten verglichen.

Führt der Vergleich der Soll-Spannungswerte mit den Ist-Spannungswerten dazu, dass die Ist-Spannungswerte von den vorgegebenen Soll-Spannungswerten um ein zuvor vorgegebenes und einstellbares Maß abweichen, so wird diese Abweichung in der Regeleinheit als Aufforderung dahingehend interpretiert, dass die wenigstens eine Spannvorrichtung für das Sicherungsmittel regelnd nachgeführt werden muss. Beispielsweise mag die Erfindung Abweichungen des Ist-Spannungswertes von dem Sollspannungswert bis maximal 10 % akzeptieren. Wird dieser Grenzwert von 10% Abweichung des Ist-Spannungswertes von dem vorgegebenen Soll-Spannungswert überschritten, so greift die Regeleinheit ein.

Zu diesem Zweck ist die Spannvorrichtung im Allgemeinen mit einem Antrieb zur Einstellung der Spannung im angeschlossenen Sicherungsmittel ausgerüstet. Bei dem Antrieb kann es sich vorteilhaft um einen solchen handeln, der elektrisch und/oder pneumatisch arbeitet. Bei einem elektrischen Antrieb sorgt beispielsweise ein Elektromotor dafür, dass über die Spannvorrichtung, bei welcher es sich im einfachsten Fall um eine Winde handeln kann, die Spannung beispielsweise im Sicherungsmittel erhöht wird. Der Antrieb wird dabei typischerweise so lange beaufschlagt, bis die gemessenen Ist-Spannungswerte des Zugspannungsmesselementes den vorgegebenen Soll-Spannungswerten oder dem einzelnen vorgegebenen Soll-Spannungswert entsprechen. In diesem Fall wird der Antrieb seitens der Regeleinheit gestoppt.

Im Falle des elektrischen Antriebes kommt meistens ein Gleichstrommotor zum Einsatz, welcher mit der an Bord eines LKWs vorhandenen Bordspannung von typischerweise 12 V oder auch 24 V (oder sogar 48 V) Gleichspannung gespeist wird. Selbstverständlich kann auch mit höheren Spannungen bei Bedarf gearbeitet werden. Alternativ oder zusätzlich kann der Antrieb aber auch pneumatisch arbeiten. In diesem Fall wird der Antrieb regelmäßig mit Druckluft betrieben und es kann sich bei der Spannvorrichtung insgesamt um eine Druckluftwinde handeln. Hierbei geht die Erfindung von der Erkenntnis aus, dass die mit der erfindungsgemäßen Vorrichtung ausgerüsteten LKWs ohnehin mit einem Kompressor als Druckluftquelle an Bord ausgerüstet sind, schon um die Druckluftbremse zu betätigen. D.h., in diesem Fall wird die ohnehin an Bord befindliche Druckluft zusätzlich für den Antrieb der Spannvorrichtung genutzt. Das ist besonders vorteilhaft, weil keine zusätzliche Energiequelle erforderlich ist. Gleiches gilt natürlich auch dann, wenn die Spannvorrichtung bzw. deren Antrieb elektrisch arbeitet.

Bei dem Zugspannungsmesselement handelt es sich typischerweise um einen Kraft- und/oder Drucksensor. Dazu kann das Zugspannungsmesselement als Kraftsensor auf Basis von beispielsweise Dehnmessstreifen, Federn, Piezzoelementen etc. arbeiten. Gleiches mag für einen vergleichbar aufgebauten Drucksensor gelten.

Für die Anbringung des Zugspannungsmesselementes schlägt eine nicht erfindungsgemäße Variante vor, dass dieses im oder am Zurrpunkt zur Festlegung des Sicherungsmittels angeordnet wird. Beispielsweise kann der entsprechende Kraft- oder Drucksensor in den Zurrpunkt vergleichbar integriert werden, wie dies im Rahmen der WO 2009/113873 A1 im Detail beschrieben wird.

Alternativ oder zusätzlich kann aber auch das Sicherungsmittel als solches mit dem Zugspannungsmesselement ausgerüstet werden. Hier hat sich eine nicht erfindungsgemäße Vorgehensweise als denkbar erwiesen, bei welcher beispielsweise Dehnungsmessstreifen in einen Spanngurt integriert werden, wie dies erneut in der WO 2009/113873 A1 im Detail beschrieben wird. Nach erfindungsgemäßer Variante ist das Zugspannungsmesselement jedoch in das Sicherungsmittel integriert. Zu diesem Zweck ist das Zugspannungsmesselement als Kunststofffaser und/oder Kunststoffgurt ausgebildet, welcher ein spannungsproportionales elektrisches Messsignal an die Steuereinheit übermittelt.

In diesem Zusammenhang ist beispielsweise denkbar, dass wenigstens eine in den Kunststoffgurt eingewebte Kunststofffaser als Lichtleitfaser ausgebildet ist. D.h., durch die fragliche Lichtleitfaser wird ein Signal an einem Ende ausgesandt und am anderen Ende wieder abgegriffen. Jede Verformung des die Lichtleitfaser aufnehmenden Kunststoffgurtes bewirkt eine Änderung des empfangenen Signals. Folgerichtig kann ein Sensor aus den entsprechenden Signalen auf den Spannungszustand des zugehörigen Kunststoffgurtes rückschließen und daher das gewünschte spannungsproportionale elektrische Messsignal erzeugen sowie an die Steuereinheit übermitteln.

In diesem Fall ist der fragliche Kunststoffgurt bzw. allgemein das Sicherungsmittel mit zumindest einem faseroptischen Sensor ausgerüstet. Der faseroptische Sensor arbeitet dabei typischerweise intrinsisch, fungiert also zugleich als Messaufnehmer. Tatsächlich kann der faseroptische Sensor vorliegend als Druck- bzw. Zugsensor arbeiten, bei welchem durch Druck oder Zug induzierte Biegeverluste zu Transmissionsänderungen in der Glasfaser führen. Diese wiederum sind ein Maß für die im Sicherungsmittel vorhandene Spannung und können als entsprechende elektrische Messsignale an die Steuereinheit übermittelt werden.

Jedenfalls lässt sich mit Hilfe des entsprechend aufgebauten Zugspannungselementes ein zur jeweiligen Spannung im Sicherungsmittel proportionales Messsignal an die Steuereinheit übermitteln. Das erfolgt im Allgemeinen drahtgebunden. Allerdings liegt es selbstverständlich auch im Rahmen der Erfindung, dass von dem jeweiligen Zugspannungsmesselement die elektrischen Messsignale drahtlos an die Steuereinheit übertragen werden.

Bei dem Sicherungsmittel handelt es sich im Allgemeinen um ein Sicherungsnetz aus sich kreuzenden Kunststoffgewebegurten. Die Kunststoffgewebegurte sind dabei an ihren Kreuzungsstellen miteinander verbunden, können beispielsweise miteinander vernäht oder verklebt oder durch jeweils ineinander greifende Fasern im Sinne einer Wirkverbindung miteinander gekoppelt sein. Die Spannung im Sicherungsmittel wird mit Hilfe des Zugspannungsmesselementes im Rahmen der Erfindung dauerhaft überwacht und an die Steuereinheit übermittelt. Da die Steuereinheit im Allgemeinen als Regeleinheit ausgelegt ist, werden die entsprechenden Ist-Spannungswerte mit dort hinterlegten Soll-Spannungswerten verglichen. Weichen die Ist-Spannungswerte beispielsweise um mehr als 10% von den Soll-Spannungswerten ab, so beaufschlagt die Regeleinheit die Spannvorrichtung und führt diese regelnd nach.

Im Ergebnis wird eine Vorrichtung zur Sicherung von Ladung auf einer Transportfläche beispielsweise eines Kraftfahrzeuges oder eines Eisenbahnwaggons zur Verfügung gestellt, die einen zusätzlichen Eingriff des Fahrers oder Beifahrers entbehrlich macht. Folgerichtig kann der entsprechende Spannungswert an den Fahrer übermittelt und beispielsweise in einer Fahrerkabine ergänzend angezeigt werden, allerdings primär zu Informationszwecken. Unabhängig hiervon wird das Sicherungsmittel in seiner Spannung jedoch in jedem Fall nachgeführt, sobald der jeweils gemessene Ist-Spannungswert von dem vorgegebenen Soll-Spannungswert um ein vorgegebenes Maß, beispielsweise mehr als 10 %, abweicht.

Insofern ist bei dem fraglichen LKW oder auch dem Eisenbahnwaggon eine Überprüfung durch den Fahrer oder Beifahrer in Strenge überhaupt nicht erforderlich, weil das System automatisch und autark arbeitet. Das ist insbesondere für autonom fahrende LKWs von besonderer Bedeutung, weil ansonsten eine einwandfreie Ladungssicherung nicht (mehr) gewährleistet werden kann. Hierin sind die wesentlichen Vorteile zu sehen.

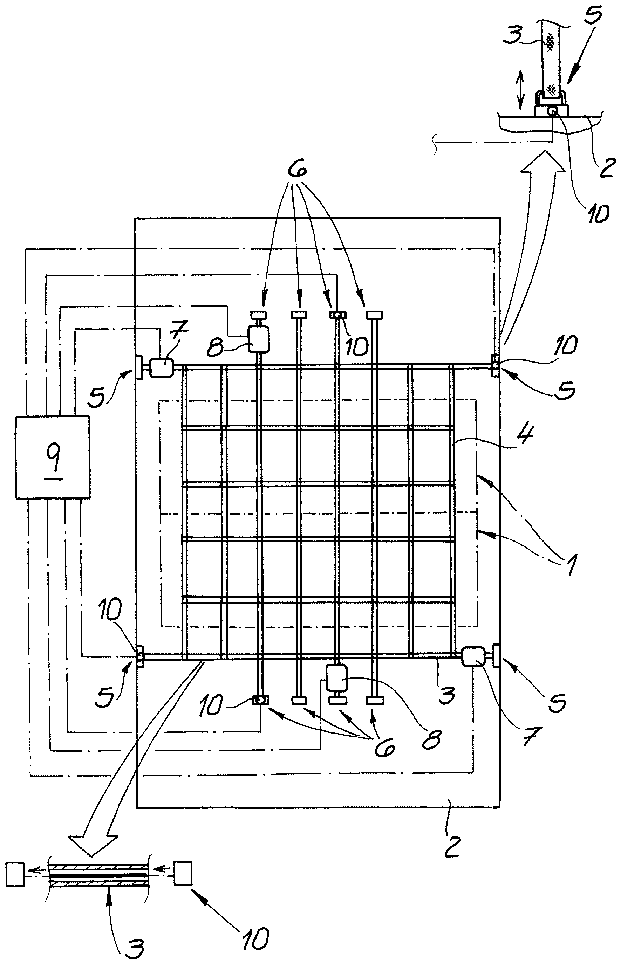

Im Folgenden wir die Erfindung anhand einer lediglich ein Ausführungsbeispiel darstellenden Zeichnung näher erläutert. Die einzige Figur zeigt eine Ladefläche eines LKWs schematisch in Aufsicht mit dem darauf angebrachten Sicherungsmittel zur Sicherung von auf der Transportfläche befindlicher Ladung.

In der einzigen Figur ist eine Vorrichtung zur Sicherung von Ladung 1 auf einer Transportfläche 2 dargestellt. Bei der Transportfläche 2 handelt es sich im Ausführungsbeispiel und nicht einschränkend um die rechteckige Ladefläche eines offenen LKW-Aufliegers, auf dem beispielsweise Rohre als Ladung 1 mit Hilfe eines Sicherungsmittels 3, 4 gegen Verrutschen gesichert werden sollen.

Das Sicherungsmittel 3, 4 ist im Ausführungsbeispiel und nicht einschränkend als Sicherungsnetz aus sich kreuzenden Kunststoffgewebegurten 3, 4 ausgebildet. Tatsächlich erkennt man in der einzigen Figur in der Zeichnung vertikal verlaufende Kunststoffgewebegurte 4, die mit horizontal verlaufenden Kunststoffgewebegurten 3 an jeweils Kreuzungsstellen miteinander gekoppelt sind.

Dazu mögen die betreffenden Kunststoffgewebegurte 3, 4 miteinander vernäht oder anderweitig in den Kreuzungsstellen verbunden sein. Selbstverständlich kann anstelle des Sicherungsnetzes aus sich kreuzenden Kunststoffgewebegurten 3, 4 auch auf ein geflochtenes Sicherungsnetz aus bspw. Seilen zurückgegriffen werden. Ebenso liegen ein oder mehrere ggf. miteinander verbundene Kunststoffgewebegurte im Rahmen der Erfindung und können das geforderte Sicherungsmittel 3, 4 darstellen, was jedoch im Detail nicht gezeigt ist.

Mit Hilfe des Sicherungsmittels 3, 4 wird die Ladung 1 zumindest teilweise umschlungen. Dazu ist das Sicherungsmittel 3, 4 flexibel ausgebildet und wird an mehreren Zurrpunkten 5, 6 der Transportfläche 2 festgelegt. Tatsächlich sind im Rahmen des dargestellten Ausführungsbeispiels vier Zurrpunkte 5 an jeweils Längsrändern der Transportfläche 2 in Längsrichtung realisiert. Außerdem insgesamt acht weitere Zurrpunkte 6 in jeweils Querrichtung der Transportfläche 2. Das gilt selbstverständlich nur beispielhaft und trägt im vorliegenden Fall der Anzahl der realisierten Kunststoffgewebegurte 3, 4 für das flächige Sicherungsmittel 3, 4 bzw. das Sicherungsnetz Rechnung.

Die Vorrichtung ist darüber hinaus mit mehreren Spannvorrichtungen 7, 8 ausgerüstet. Tatsächlich sind in dem Ausführungsbeispiel zwei in Querrichtung der Transportfläche 2 an dem Sicherungsmittel 3, 4 angreifende Spannvorrichtungen 7 und zusätzlich zwei in Längsrichtung an dem fraglichen Sicherungsmittel 3, 4 angreifende Spannvorrichtungen 8 realisiert. Bei den fraglichen Spannvorrichtungen 7, 8 handelt es sich im Ausführungsbeispiel um angetriebene Winden bzw. Gurtwinden. Mit Hilfe der Winden respektive Gurtwinden werden die jeweils eingeschlauften Kunststoffgewebegurte 3 respektive 4 in ihrer Spannung verändert. Dazu verfügt die jeweilige Spannvorrichtung 7, 8 respektive die an dieser Stelle realisierte Winde über einen Antrieb.

Der nicht näher dargestellte Antrieb arbeitet nach dem Ausführungsbeispiel elektrisch und/oder pneumatisch. Jedenfalls wird der Antrieb wie auch die Spannvorrichtung 7, 8 insgesamt mit Hilfe einer Steuereinheit 9 beaufschlagt und von dieser angesteuert. Dazu ist die Steuereinheit 9 im Rahmen des Ausführungsbeispiels und nicht einschränkend als Regeleinheit 9 ausgelegt.

Zum grundsätzlichen Aufbau gehören dann noch mehrere Zugspannungsmesselemente 10. Die Zugspannungsmesselemente 10 sind im Ausführungsbeispiel an korrespondierenden Zurrpunkten 5, 6 angeordnet. Tatsächlich mag das jeweilige Zugspannungsmesselement 10 als Kraft- bzw. Drucksensor ausgebildet sein und in diesem Zusammenhang auf eine Verformung des betreffenden Zurrpunktes 5, 6 reagieren. So ist es im einfachsten Fall denkbar, dass der Zurrpunkt 5 ausweislich der vergrößerten Darstellung in der einzigen Figur mit einem Haken ausgerüstet ist, in welchen im Beispielfall der dort festgelegte horizontale Kunststoffgewebegurt 3 eingeschlauft ist. Der fragliche Haken des Zurrpunktes 5 ist nun gegenüber der Transportfläche 2 bzw. einem Gehäuse bewegbar unter Zwischenschaltung des Zugspannungsmesselementes bzw. Kraftsensors 10 an dieses angeschlossen. Eine Veränderung der Spannung im zugehörigen horizontalen Kunststoffgewebegurt 3 entsprechend der zugehörigen Richtung des Doppelpfeils führt nun dazu, dass die am zugehörigen Zugspannungsmesselement bzw. Kraftsensor 10 angreifende Kraft variiert.

Die entsprechenden Signale des Zugspannungsmesselementes 10 werden nun an die Steuereinheit bzw. Regeleinheit 9 übermittelt. In der Steuer- bzw.

Regeleinheit 9 sind Soll-Spannungswerte für den horizontalen Kunststoffgewebegurt 3 im Beispielfall hinterlegt. Weicht nun die tatsächlich am zugehörigen Zurrpunkt 5 gemessene Ist-Spannung von dem hinterlegten Soll-Spannungswert ab, und zwar unter Berücksichtigung einer hinterlegten Abweichung, so beaufschlagt die Regeleinheit 9 die korrespondierende Spannvorrichtung 7. Die Spannvorrichtung 7 im Beispielfall wird nun so lange nachgeführt, bis die am Zurrpunkt 5 gemessenen Ist-Spannungswerte mit den Soll-Spannungswerten innerhalb der vorgegebenen Abweichung übereinstimmen. Dann endet die Beaufschlagung der Spannvorrichtung 7 mit Hilfe der Regeleinheit 9. - Vergleichbar wird an den Zurrpunkten 6 vorgegangen und gearbeitet.

Ebenfalls in der einzigen Figur ist die Möglichkeit angedeutet, dass der fragliche horizontal verlaufende Kunststoffgewebegurt 3 mit einem integrierten Zugspannungsmesselement 10 ausgerüstet ist. In diesem Fall handelt es sich bei dem Zugspannungsmesselement 10 um einen faseroptischen Sensor. Der faseroptische Sensor wird an einem Ende mit einem optischen Signal beaufschlagt, welches am anderen Ende abgegriffen und ausgewertet wird. Bei einer Veränderung der Zugspannung innerhalb des Kunststoffgewebegurtes 3 ändert sich auch die Intensität des durch den faseroptischen Sensor bzw. das Zugspannungsmesselement 10 hindurchgeschickten Lichtsignals, so das erneut mit Hilfe des solchermaßen ausgelegten Zugspannungsmesselementes 10 ein spannungsproportionales elektrisches Messsignal an die Regeleinheit 9 übermittelt wird.

Der Antrieb für die Winde bzw. die Spannvorrichtung 7, 8 kann elektrisch und/oder pneumatisch arbeiten. Im letztgenannten Fall sorgt eine Druckluftquelle, die bei den meisten LKWs ohnehin an Bord ist, um die Funktion der Druckluftbremse zu gewährleisten, dafür, dass zusätzlich die Spannvorrichtung 7, 8 bzw. die an dieser Stelle meistens realisierte Durchluftwinde entsprechend den Signalen der Regeleinheit 9 beaufschlagt wird. Eine solche Druckluftwinde ist mit dem besonderen Vorteil verbunden, dass hiermit hohe Kräfte auf das Sicherungsmittel 3, 4 übertragen werden können. Insgesamt erfolgt mit Hilfe der beschriebenen Vorrichtung eine vollkommen automatische und autonome Ladungssicherung unabhängig davon, ob ein Fahrer oder Beifahrer eingreift oder nicht und auch unabhängig davon, ob ein solcher Fahrer oder Beifahrer überhaupt an Bord ist. Insofern ist die beschriebene Vorrichtung insbesondere für autonom fahrende LKWs besonders geeignet und vorgesehen.

## Patentansprüche

1. Vorrichtung zur Sicherung von Ladung (1) auf einer Transportfläche (2) beispielsweise eines Kraftfahrzeuges oder eines Eisenbahnwaggons, mit wenigstens einem die Ladung (1) zumindest teilweise umschlingenden flexiblen Sicherungsmittel (3, 4), welches an zwei oder mehr Zurrpunkten (5, 6) der Transportfläche (2) festgelegt ist, ferner mit wenigstens einer Spannvorrichtung (7, 8) für das Sicherungsmittel (3, 4), und mit einem oder mehreren Zugspannungsmesselementen (10) zum Erfassen der Spannung des Sicherungsmittels (3, 4), wobei eine Steuereinheit (9) vorgesehen ist, welche in Abhängigkeit von mit Hilfe des Zugspannungsmesselementes (10) erfassten Spannungswerten des Sicherungsmittels (3, 4) die Spannvorrichtung (7, 8) entsprechend beaufschlagt,
**dadurch gekennzeichnet, dass**
das Sicherungsmittel (3, 4) mit dem Zugspannungsmesselement (10) ausgerüstet und hierzu das Zugspannungsmesselement (10) in das Sicherungsmittel (3, 4) integriert ist, wobei
das Zugspannungsmesselement (10) als Kunststofffaser und/oder Kunststoffgurt ausgebildet ist, welche (r) ein spannungsproportionales elektrisches Messsignal an die Steuereinheit (9) übermittelt.

2. Vorrichtung nach Anspruch 1, **dadurch gekennzeichnet, dass** die Steuereinheit (9) als Regeleinheit (9) ausgebildet ist.

3. Vorrichtung nach Anspruch 1 oder 2, **dadurch gekennzeichnet, dass** das Zugspannungsmesselement (10) im oder am Zurrpunkt (5, 6) zur Befestigung des Sicherungsmittels (3, 4) angeordnet ist.

4. Vorrichtung nach einem der Ansprüche 1 bis 3, **dadurch gekennzeichnet, dass** die Spannvorrichtung (7, 8) mit einem Antrieb zur Einstellung der Spannung im angeschlossenen Sicherungsmittel (3, 4) ausgerüstet ist.

5. Vorrichtung nach Anspruch 4, **dadurch gekennzeichnet, dass** der Antrieb elektrisch und/oder pneumatisch arbeitet.

6. Vorrichtung nach einem der Ansprüche 1 bis 5, **dadurch gekennzeichnet, dass** das Sicherungsmittel (3, 4) als Sicherungsnetz aus sich kreuzenden Kunststoffgewebegurten (3, 4) ausgebildet ist.

7. Vorrichtung nach einem der Ansprüche 1 bis 6, **dadurch gekennzeichnet, dass** das Zugspannungsmesselement (10) als Kraft- und/oder Drucksensor ausgebildet ist.

## Claims

1. A device for securing a cargo (1) on a transporting surface (2), for example of a motor vehicle or a railway wagon, with at least one flexible securing means (3, 4) which at least partially loops around the cargo (1) and is fastened at one or more lashing points (5, 6) of the transporting surface (2), also with at least one tensioning device (7, 8) for the securing means (3, 4) and with one or more tension measuring elements (10) for recording the tension of the securing means (3, 4), wherein a control unit (9) is provided which, by way of tension values of the securing means (3, 4) recorded by the tension measuring element (10), acts on the tensioning device (7, 8) accordingly,
**characterised in that**
the securing means (3, 4) is fitted with the tension measuring element (10) and for this the tension measuring element (10) is integrated into the securing means (3, 4), wherein
the tension measuring element (10) is designed as a plastic fibre and/or a plastic strap which transmits to the control unit (9) an electrical measuring signal which is proportional to the tension.

2. The device according to claim 1, **characterised in that** the control unit (9) is configured as a regulating unit (9) .

3. The device according to claim 1 or 2, **characterised in that** the tension measuring element (10) is arranged in or at the lashing point (5, 6) for fastening the securing means (3, 4).

4. The device according to any one of claims 1 to 3, **characterised in that** the tensioning device (7, 8) is equipped with an actuator for adjusting the tension in the connected securing means (3, 4).

5. The device according to claim 4, **characterised in that** the actuator is electrically and/or pneumatically operated.

6. The device according to any one of claims 1 to 5, **characterised in that** the securing means (3, 4) is designed as a securing net made of woven plastic straps (3, 4) that cross each other.

7. The device according to any one of claims 1 to 6, **characterised in that** the tension measuring element (10) is designed as a force and/or pressure sensor.

## Revendications

1. Dispositif, destiné à sécuriser un chargement (1) sur une surface de transport (2), par exemple d'un véhicule automobile ou d'un wagon ferroviaire, pourvu d'au moins un moyen de blocage (3, 4) flexible, enlaçant au moins partiellement le chargement (1), lequel est immobilisé sur deux points d'arrimage (5, 6) ou plus de la surface de transport (2), pourvu par ailleurs d'au moins un dispositif de serrage (7, 8) pour le moyen de blocage (3, 4), et pourvu d'un ou de plusieurs éléments de mesure de la contrainte en traction (10), destinés à détecter la tension du moyen de blocage (3, 4), une unité de commande (9) étant prévue, laquelle en fonction de valeurs de tension du moyen de blocage (3, 4) détectées à l'aide de l'élément de mesure de la contrainte en traction (10) soumet en conséquence le dispositif de serrage (7, 8),
**caractérisé en ce que**
le moyen de blocage (3, 4) est équipé de l'élément de mesure de la contrainte en traction (10) et à cet effet, l'élément de mesure de la contrainte en traction (10) est intégré dans le moyen de blocage (3, 4),
l'élément de mesure de la contrainte en traction (10) étant conçu sous la forme d'une fibre de matière plastique et/ou sous la forme d'une sangle en matière plastique, laquelle transmet à l'unité de commande (9) un signal de mesure électrique proportionnel à la tension.

2. Dispositif selon la revendication 1, **caractérisé en ce que** l'unité de commande (9) est conçue sous la forme d'une unité de réglage (9).

3. Dispositif selon la revendication 1 ou 2, **caractérisé en ce que** l'élément de mesure de la contrainte en traction (10) est placé dans ou sur le point d'arrimage (5, 6), pour la fixation du moyen de blocage (3, 4).

4. Dispositif selon l'une quelconque des revendications 1 à 3, **caractérisé en ce que** le dispositif de serrage (7, 8) est équipé d'un entraînement pour le réglage de la tension dans le moyen de blocage (3, 4) raccordé.

5. Dispositif selon la revendication 4, **caractérisé en ce que** l'entraînement fonctionne par voie électrique et/ou pneumatique.

6. Dispositif selon l'une quelconque des revendications 1 à 5, **caractérisé en ce que** le moyen de blocage (3, 4) est conçu sous la forme d'un filet de sécurisation en sangles en tissu plastique (3, 4) qui se croisent.

7. Dispositif selon l'une quelconque des revendications 1 à 6, **caractérisé en ce que** l'élément de mesure de la contrainte en traction (10) est conçu sous la forme d'un capteur de force et/ou de pression.
